# FASCICULE DE BREVET EUROPEEN

(11) **EP 0 467 751 B1**
(45) Date de publication et mention de la délivrance du brevet: **06.09.1995**
(21) Numéro de dépôt: 91401897.3
(22) Date de dépôt: 09.07.1991
(51) Int. Cl.: B60H 1/00, F04D 29/62

(54) **Pulseur d'air pour installation de chauffage et/ou climatisation de véhicule automobile, et installation équipée de deux pulseurs d'air de ce type**
Gebläse für Heizungs- und/oder Klimaanlagen für Kraftfahrzeuge und Einrichtung ausgerüstet mit zwei solchen Gebläsen
Ventilator for heating- and/or air-conditioning system for motor-vehicles and installation equipped with two ventilators of this kind

(30) Priorité: 16.07.1990 FR 9009051
(43) Date de publication de la demande: 22.01.1992
(73) Titulaire: VALEO THERMIQUE HABITACLE, 78320 Le Mesnil-Saint-Denis (FR)
(72) Inventeur: Becquerel, Michel, F-78320 Le Mesnil-Saint-Denis (FR)
(74) Mandataire: Gamonal, Didier

(56) Documents cités:
- FR-A- 2 143 287
- GB-A- 220 454
- GB-A- 2 049 159
- PATENT ABSTRACTS OF JAPAN vol. 13, no. 143 (M-811)(3491) 07 avril 1989,& JP-A-63 306914 (HITACHI) 14 décembre 1988
- PATENT ABSTRACTS OF JAPAN vol. 14, no. 228 (M-973)(4171) 15 mai 1990,& JP-A-02 57417 (HITACHI) 27 février 1990

## Description

L'invention concerne un pulseur d'air pour une installation de chauffage et/ou de climatisation pour véhicule automobile, ainsi qu'une installation équipée de deux pulseurs d'air de ce type.

Il est connu de monter un pulseur d'air en sortie d'un boîtier d'admission d'air pour alimenter ce pulseur en air extérieur et/ou en air recyclé. Le pulseur comprend habituellement une enveloppe en forme de volute qui est munie d'un orifice d'entrée d'air et d'un orifice de sortie d'air et qui est équipée intérieurement d'un groupe moto-ventilateur, c'est-à-dire d'un ensemble moteur-turbine, propre à aspirer un flux d'air par l'orifice d'entrée et le pulser par l'orifice de sortie.

Compte tenu de la configuration de la volute, le flux d'air pulsé s'échappe par l'orifice de sortie dans une direction généralement orthogonale par rapport au flux d'air introduit par l'orifice d'entrée.

L'orifice de sortie est habituellement relié à l'entrée d'un boîtier de distribution permettant de répartir ensuite le flux d'air pulsé à l'intérieur de l'habitacle du véhicule après l'avoir réchauffé si nécessaire et éventuellement l'avoir refroidi si l'installation permet aussi la climatisation.

Dans certains types de véhicules, où le volume de l'habitacle est important, il peut être nécessaire de prévoir deux pulseurs d'air dont les orifices de sortie respectifs sont reliés aux deux extrémités d'un boîtier de distribution commun.

Une installation de ce type est décrite dans la demande de brevet français N° 90 05680 déposée le 4 mai 1990 au nom de la Demanderesse.

Généralement, ce boîtier de distribution est implanté transversalement sous le pare-brise du véhicule et les deux pulseurs sont disposés respectivement du côté gauche et du côté droit du véhicule, de sorte que leurs orifices de sortie soient reliés à des niveaux différents du boîtier de distribution.

Par conséquent, pour une même installation, il faut normalement prévoir deux pulseurs de configuration différente pour pouvoir assurer un montage en opposition de leurs orifices de sortie respectifs sur le boîtier de distribution.

Par ailleurs, en fonction de l'espace disponible sous la planche de bord, on peut être amené pour deux versions différentes d'un même véhicule de prévoir, dans une version, que l'orifice de sortie du pulseur du côté gauche soit à un niveau supérieur à l'orifice de sortie du pulseur du côté droit, ou inversement.

C'est le cas souvent des véhicules disponibles aussi bien en conduite à droite (volant à droite) que des véhicules disponibles en conduite à gauche (volant à gauche).

Il faut alors pouvoir disposer de quatre configurations de pulseur différentes, ce qui multiplie le nombre de pièces.

Il est également connu par le document JP-A-63-306914 un pulseur d'air qui comprend un support comportant une ouverture apte à être fixée indifféremment sur l'une ou l'autre des faces d'un carter le supportant.

Cette configuration présente l'inconvénient de nécessiter une symétrie du carter et des fixations supplémentaires sur chaque face du carter ce qui ne peut que compliquer l'élaboration de l'appareil.

L'invention a notamment pour but d'éviter cet inconvient.

Elle propose à cet effet un pulseur d'air pour une installation de chauffage et/ou de climatisation de véhicule automobiles, propre à être monté en sortie d'un boîtier d'admission d'air, ledit pulseur comprenant un groupe motoventilateur comportant une turbine propre à tourner dans une enveloppe pour prélever de l'air provenant du boîtier d'admission et le pulser vers l'orifice de sortie de ladite enveloppe et un moteur propre à être fixé dans un support moteur apte à être monté sur l'enveloppe, caractérisé en ce que le pulseur d'air comprend en outre une pièce de raccordement ayant un bord d'entrée et un bord de sortie opposés l'un à l'autre, le bord d'entrée étant propre à être monté sur l'ouverture de sortie du boîtier d'admission dans l'une ou l'autre de deux positions différentes obtenues par rotation d'un demi-tour de la pièce de raccordement sur elle-même autour d'un premier axe, en ce que l'enveloppe comporte une paroi latérale en forme de volute munie d'un orifice de sortie et deux bords d'accostage opposés identiques propres à s'adapter indifféremment sur le bord de sortie de la pièce de raccordement pour permettre de définir deux positions d'accostage différentes par rotation d'un demi-tour de l'enveloppe autour d'un second axe perpendiculaire au premier axe et en ce que le support moteur comporte un bord d'assemblage propre à s'adapter sur le bord d'accostage de l'enveloppe qui est opposé à celui qui s'adapte sur la pièce de raccordement.

Ainsi, à partir des mêmes éléments, on peut obtenir quatre positions de montage différentes et, par conséquent, quatre configurations différentes du pulseur qui diffèrent entre elles par l'orientation de l'orifice de sortie de la volute par rapport au boîtier d'admission d'air sur lequel le pulseur est adapté.

De ce fait, on peut utiliser dans une même installation deux pulseurs adaptés respectivement sur deux boîtiers d'admission identiques et ayant des configurations différentes correspondant aux deux positions différentes de la pièce de raccordement.

En outre, en modifiant les positions de l'enveloppe, on obtient encore deux configurations de pulseur adaptables toutes deux sur un autre type d'installation.

Selon une autre caractéristique de l'invention, les deux bords d'accostage de l'enveloppe en forme de volute sont dans des plans parallèles entre eux.

Avantageusement, l'enveloppe en forme de volute est formée de deux parties généralement semblables assemblées entre elles par des bords de jonction s'étendant dans des plans parallèles aux deux bords d'accostage.

De préférence, l'une des deux parties de volute comprend des pattes de fixation définissant un plan de fixation s'étendant parallèlement et à proximité du plan de jonction des deux parties de volute.

Avantageusement, l'orifice de sortie de la volute comprend des moyens pour sa fixation sur une entrée d'air d'un boîtier de distribution.

Sous un autre aspect, l'invention concerne une installation de chauffage et/ou de climatisation de véhicule automobile qui comprend deux pulseurs d'air tels que définis précédemment, montés respectivement en sortie de deux boîtiers d'admission d'air identiques, et montés respectivement sur les deux entrées d'air opposées d'un boîtier de distribution.

Dans la description qui suit, faite seulement à titre d'exemple, on se réfère aux dessins annexés, sur lesquels :
- la figure 1 est une vue en élévation d'une partie d'une installation de chauffage et/ou de climatisation de véhicule automobile munie de deux pulseurs d'air selon l'invention, dans une première version ;
- la figure 2 est une vue en élévation du pulseur situé du côté gauche de l'installation de la figure 1 ;
- la figure 3 est une vue en coupe selon la ligne III-III de la figure 2 ;
- la figure 4 est une vue en élévation du pulseur situé du côté droit de l'installation de la figure 1 ;
- la figure 5 est une vue en coupe selon la ligne V-V de la figure 4 ;
- la figure 6 est une vue en élévation d'une partie d'une installation de chauffage et/ou de climatisation de véhicule automobile munie de deux pulseurs d'air selon l'invention, dans une seconde version ;
- la figure 7 est une vue en élévation du pulseur situé du côté gauche de l'installation de la figure 6 ;
- la figure 8 est une vue en coupe suivant la ligne VIII-VIII de la figure 7 ;
- la figure 9 est une vue en élévation du pulseur situé du côté droit de l'installation de la figure 6 ; et
- la figure 10 est une vue en coupe selon la ligne X-X de la figure 9.

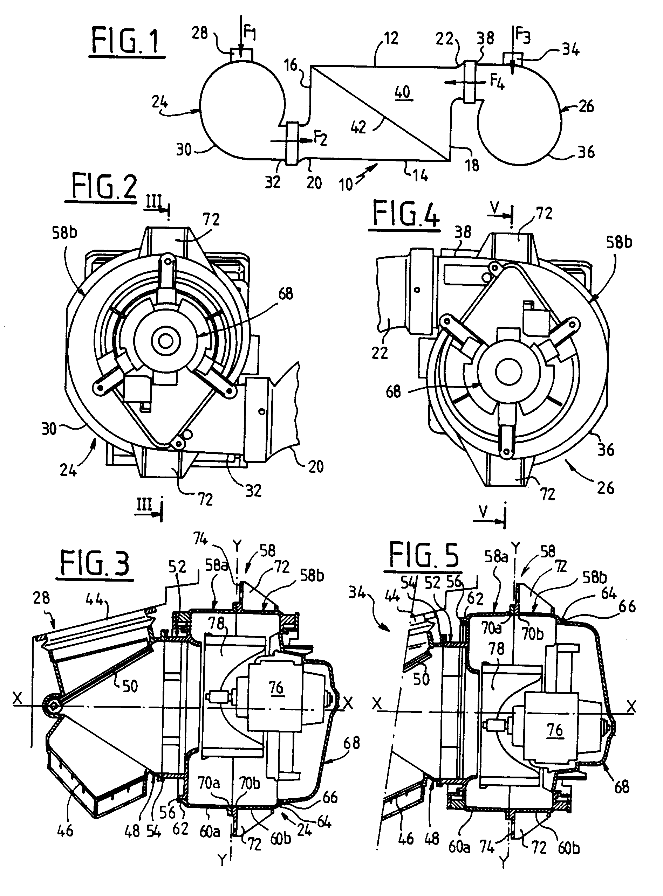

On se réfère tout d'abord à la figure 1 qui montre une installation de chauffage et/ou de climatisation pour véhicule automobile, comprenant un boîtier de distribution 10 limité par une paroi supérieure 12, une paroi inférieure 14 et deux parois latérales 16 et 18. Le boîtier est muni d'une entrée d'air 20 formée dans la paroi latérale 16 à proximité de la paroi inférieure 14 et d'une entrée 22 formée dans la paroi latérale 18 et à proximité de la paroi supérieure 12.

Le boîtier 10 est destiné à être implanté transversalement sous le pare-brise d'un véhicule automobile, l'entrée 20 étant située du côté gauche et l'entrée 22 du côté droit, l'entrée 20 débouchant en outre à un niveau inférieur à celui de l'entrée 22.

L'entrée 20 est propre à être raccordée à un pulseur d'air 24 situé du côté gauche et l'entrée 22 à un pulseur d'air 26 situé du côté droit. Le pulseur 24 est relié à la sortie d'un boîtier d'admission d'air 28 propre à être alimenté en air extérieur ou en air recyclé comme indiqué par la flèche F1. Le pulseur 24 comprend une enveloppe 30 en forme de volute qui est munie d'un orifice de sortie 32 relié à l'entrée 20 du boîtier 10 pour introduire, à l'intérieur de ce boîtier, un flux d'air pulsé comme indiqué par la flèche F2.

Le pulseur 26 est relié à la sortie d'un boîtier d'admission 34 identique au boîtier 28 et propre à être alimenté en air extérieur ou en air recyclé comme indiqué par la flèche F3. Le pulseur 26 comprend une enceinte 36 en forme de volute qui est munie d'un orifice de sortie 38 propre à introduire de l'air pulsé à l'intérieur du boîtier 10 comme représenté par la flèche F4.

Ainsi, le boîtier 10 reçoit deux flux d'air introduits selon des directions d'introduction parallèles et de sens opposé et parallèlement à une paroi de fond 40 du boîtier 10. Ce dernier est muni d'une cloison de séparation 42 qui s'étend sensiblement en diagonale et qui est érigée à partir de la paroi 40. De ce fait, les flux d'air introduits respectivement par les entrées 20 et 22 sont ensuite déviés par cette cloison 42 pour être acheminés à l'intérieur de l'habitacle dans une direction généralement perpendiculaire à celle du plan du dessin.

Une installation telle que représentée à la figure 1 est connue, d'une manière générale, par la Demande de Brevet français No 90 05680 déjà citée.

Pour réaliser une installation telle que représentée à la figure 1, il faudrait normalement prévoir des pulseurs 24 et 26 de structure différente, compte tenu du fait que l'orientation de l'orifice de sortie 32 par rapport au boîtier d'admission 28 est différente de celle de l'orifice de sortie 38 par rapport au boîtier d'admission 34.

L'invention permet de réaliser les pulseurs 24 et 26 à partir des mêmes éléments constitutifs, comme cela sera expliqué plus loin.

On se réfère tout d'abord aux figures 2 et 3 pour décrire le pulseur 24 situé du côté gauche. Le boîtier d'admission 28 comprend une ouverture 44 servant par exemple à l'admission d'air extérieur et une ouverture d'entrée 46 servant par exemple à l'admission d'air recyclé et une ouverture de sortie 48 sur laquelle est raccordé le pulseur 24. Le débit d'air introduit par les ouvertures d'entrée 44 et 46 est contrôlé par un volet pivotant 50.

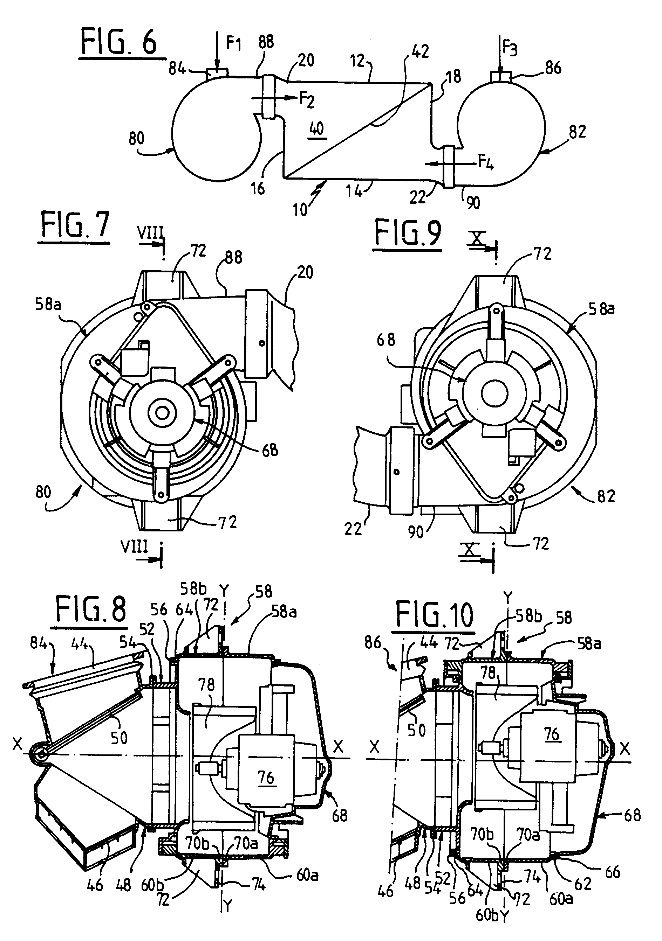

Le pulseur 24 comprend une pièce de raccordement 52 ayant un bord d'entrée 54 et un bord de sortie 56 opposés l'un à l'autre et situés dans des plans parallèles entre eux. Le bord d'entrée 54 est propre à être monté sur l'ouverture de sortie 48 du boîtier d'admission 28, dans l'une ou l'autre de deux positions différentes obtenues par rotation d'un demi-tour de la pièce de raccordement 52 autour d'un premier axe XX. L'une des positions de la pièce 52 est représentée sur les figures 2 et 3 et l'autre position représentée sur les figures 4 et 5.

Le pulseur 24 comprend en outre une enveloppe 58 elle-même formée de deux parties 58a et 58b. Elle comprend une paroi latérale 60a, 60b en forme de volute qui est munie de l'orifice de sortie 32 (figure 2). L'enveloppe 58 comprend deux bords d'accostage 62 et 64, opposés et identiques, propres à s'adapter indifféremment sur le bord de sortie 56 de la pièce de raccordement 52 pour permettre de définir deux positions d'accostage différentes par rotation d'un demi-tour de l'enveloppe 58 autour d'un second axe YY qui est perpendiculaire au premier axe XX. Dans la configuration des figures 2 et 3, de même que dans la configuration des figures 4 et 5, le bord d'assemblage 62 de l'enveloppe 58 est adapté sur la pièce 52 et le bord d'assemblage 64 est adapté sur le bord d'assemblage 66 d'un support moteur 68.

Les bords d'assemblage 62 et 64 sont parallèles entre eux et sont en outre parallèles au plan de jonction des parties 58a et 58b, ces dernières présentant des bords de jonction 70a et 70b.

L'une des deux parties de la volute, dans l'exemple la partie 58b, comprend deux pattes de fixation 72 définissant chacune un plan de fixation 74 qui s'étend parallèlement et à proximité du plan de jonction des parties 58a et 58b.

Le pulseur 24 comprend en outre un groupe moto-ventilateur comportant un moteur 76 propre à être fixé dans le support moteur 68 et une turbine 78 propre à tourner à l'intérieur de l'enveloppe 58 pour prélever l'air provenant du boîtier d'admission et le pulser vers l'orifice de sortie 32 de la volute.

Le pulseur 26 des figures 4 et 5 est obtenu à partir des mêmes éléments que celui des figures 2 et 3, la seule différence étant que la pièce de raccordement 52, en même temps que l'enveloppe 58 et le support moteur 68, ont subi une rotation d'un demi-tour autour de l'axe XX.

On se réfère maintenant à la figure 6 qui montre une autre configuration dans laquelle l'entrée 20 est située en haut du boîtier 10 et l'entrée 22 en bas au lieu d'être situées respectivement en bas et en haut dans le cas de la figure 1.

Le boîtier de distribution 10 est relié à deux pulseurs d'air 80 et 82 situés respectivement du côté gauche et du côté droit du véhicule. Ces deux pulseurs sont alimentés par deux boîtiers d'admission 84 respectivement 86 identiques entre eux et identiques aux boîtiers 28 et 34 de la figure 1.

Les pulseurs 80 et 82 sont obtenus à partir des mêmes éléments que ceux des figures 2 et 3 et des figures 4 et 5. Ils possèdent des orifices de sortie respectifs 88, 90 adaptés respectivement sur les entrées 20 et 22 du boîtier 10.

Dans la configuration des figures 7 et 8, la pièce de raccordement 52 se trouve exactement dans la même position que dans le cas des figures 4 et 5.

Par contre, l'ensemble de l'enveloppe 58 a subi une rotation d'un demi-tour autour de l'axe YY. Le bord d'accostage 64 de l'enveloppe 58 est maintenant adapté sur le bord de sortie 56 de la pièce de raccordement 52, tandis que le bord d'accostage 62 de l'enveloppe 58 est maintenant adapté sur le bord d'assemblage 66 du support moteur 68.

Pour passer de la configuration représentée aux figures 7 et 8 à la configuration représentée aux figures 9 et 10, on fait tourner la pièce de raccordement 52 (en même temps que l'enveloppe 58 et le support moteur 68) d'un demi-tour autour de l'axe XX.

Par conséquent, à partir des mêmes éléments constitutifs on peut obtenir quatre configurations différentes de pulseur comme décrit précédemment.

Par exemple, l'installation représentée à la figure 1 peut convenir à un véhicule prévu pour une conduite à gauche (volant à gauche) et l'installation de la figure 6 pour le même véhicule dans la version conduite à droite (volant à droite).

## Revendications

1. Pulseur d'air pour installation de chauffage et/ou de climatisation de véhicule automobile, propre à être monté en sortie d'un boîtier d'admission d'air (28,34;84,86), ledit pulseur comprenant un groupe motoventilateur comportant une turbine (78) propre à tourner dans une enveloppe (58) pour prélever de l'air provenant du boîtier d'admission (28,34;84,86) et le pulser vers l'orifice de sortie de ladite enveloppe et un moteur (76) propre à être fixé dans un support moteur (68) apte à être monté sur l'enveloppe (58), caractérisé en ce que le pulseur d'air comprend en outre une pièce de raccordement (52) ayant un bord d'entrée (54)et un bord de sortie (56) opposés l'un à l'autre, le bord d'entrée (54) étant propre à être monté sur l'ouverture de sortie (48) du boîtier d'admission (28,34;84,86) dans l'une ou l'autre de deux positions différentes obtenues par rotation d'un demi-tour de la pièce de raccordement (52) sur elle-même autour d'un premier axe (XX), en ce que l'enveloppe (58) comporte une paroi latérale (60a,60b) en forme de volute munie d'un orifice de sortie (32;38;88;90) et deux bords d'accostage (62,64) opposés identiques propres à s'adapter indifféremment sur le bord de sortie (56) de la pièce de raccordement (52) pour permettre de définir deux positions d'accostage différentes par rotation d'un demi-tour de l'enveloppe autour d'un second axe (YY) perpendiculaire au premier axe (XX) et en ce que le support moteur (68) comporte un bord d'assemblage (66) propre à s'adapter sur le bord d'accostage (62,64) de l'enveloppe (58) qui est opposé à celui qui s'adapte sur la pièce de raccordement (52).

2. Pulseur selon ravendication 1, caractérisé en ce que le bord d'entrée (54) et le bord de sortie (56) de la pièce de raccordement (52) sont dans des plans parallèles entre eux et perpendiculaires au premier axe (XX).

3. Pulseur selon la revendication 1, caractérisé en ce que les deux bords d'accostage (62,64) de l'enveloppe (58) en forme de volute sont dans des plans parallèles entre eux.

4. Pulseur selon la revendication 1, caractérisé en ce que l'enveloppe (58) en forme de volute est formée de deux parties (58a,58b) généralement semblables, assemblées entre elles par des bords de jonction (70a,70b) s'étendant dans des plans parallèles aux bords d'accostage.

5. Pulseur selon la revendication 4, caractérisé en ce que l'une (58b) des deux parties de volute comprend des pattes de fixation (72) définissant une face de fixation (74) s'étendant parallèlement et à proximité des plans de jonction des deux parties de volute.

6. Installation de chauffage et/ou de climatisation de véhicule automobile, caractérisée en ce qu'elle comprend deux pulseurs selon l'une des revendications 1 à 5, montés respectivement en sortie de deux boîtiers d'admission d'air (28,34;84,86) identiques, et montés respectivement sur les deux entrées d'air opposées (20,22) d'un boîtier de distribution (10).

7. Installation selon la revendication 6, caractérisée en ce que les pulseurs (24,26;80,82) ont des configurations qui diffèrent l'une de l'autre par la position de la pièce de raccordement (52).

## Claims

1. An air blower unit for a motor vehicle heating and/or air conditioning installation, adapted to be mounted on the outlet side of an air admission housing (28, 34; 84, 86), the said blower including a motorised fan unit comprising a blower rotor (78) adapted to rotate within a casing (58) for taking air from the admission housing (28, 34; 84, 86) and to deliver it towards the delivery orifice of the said casing, together with a motor (76) which is adapted to be fixed in a motor support member (68) arranged to be mounted on the casing (58), characterised in that the air blower further includes a connection member (52) having an inlet edge (54) and an outlet edge (56) in opposed relationship to each other, the inlet edge (54) being arranged to be mounted on the outlet aperture (48) of the admission housing (28, 34; 84, 86) in one or other of two different positions, obtained by rotation of the connection member (52) on itself through one half revolution about a first axis (XX), in that the casing (58) has a lateral wall (60a, 60b) in the form of a volute having a delivery orifice (32; 38; 88; 90) and two identical opposed abutment edges (62, 64), which are arranged to fit, indifferently, on the outlet edge (56) of the connection member (52), whereby to define two different mounting positions selectable by rotation of the casing through a half revolution about a second axis (YY) at right angles to the first axis (XX), and in that the motor support member (68) has an assembly edge (66) arranged to fit on the abutment edge (62, 64) of the casing (58) which is opposite to the edge that fits on the connection member (52).

2. A blower according to Claim 1, characterised in that the inlet edge (54) and the outlet edge (56) of the connection member (52) are in planes parallel to each other and at right angles to the first axis (XX).

3. A blower according to Claim 1, characterised in that the two abutment edges (62, 64) of the volute casing (58) are in planes parallel to each other.

4. A blower according to Claim 1, characterised in that the volute casing (58) consists of two generally similar parts (58a, 58b), which are assembled together through junction edges (70a, 70b) extending in planes parallel to the abutment edges.

5. A blower according to Claim 4, characterised in that one (58b) of the two volute parts has fastening brackets (72) defining a fastening surface (74) which extends parallel to, and close to, junction planes of the two volute parts.

6. A motor vehicle heating and/or air conditioning installation, characterised in that it includes two blowers according to one of Claims 1 to 5, mounted at the respective outlet sides of two identical air admission housings (28, 34; 84, 86), and mounted on the respective two opposed air inlets (20, 22) of a distribution housing (10).

7. An installation according to Claim 6, characterised in that the blowers (24, 26; 80, 82) have configurations which differ from each other as regards the position of the connection member (52).

## Patentansprüche

1. Gebläse für eine Heizungs- und/ oder Klimaanlage für Kraftfahrzeuge, das am Auslaß eines Luftzufuhrgehäuses (28, 34; 84, 86) angebracht werden kann, wobei dieses Gebläse einen Lüftersatz enthält, der eine Turbine (78) umfaßt, die sich in einem Gehäuse (58) drehen kann, um Luft, die aus dem Luftzufuhrgehäuse (28, 34; 84, 86) kommt, zu entnehmen und sie zur Auslaßöffnung des Turbinengehäuses zu blasen, und einen Motor (76), der in einem Motorträger (68) befestigt werden kann, welcher sich an dem Turbinengehäuse (58) anbringen läßt, **dadurch gekennzeichnet,** daß das Gebläse außerdem ein Anschlußstück (52) mit einer Einlaßkante (54) und einer Auslaßkante (56) umfaßt, die einander gegenüberliegen, wobei die Einlaßkante (54) an der Auslaßöffnung (48) des Luftzufuhrgehäuses (28, 34; 84, 86) in einer von zwei unterschiedlichen Positionen angebracht werden kann, die sich durch Drehen des Anschlußstücks (52) um eine halbe Umdrehung um eine erste Achse (XX) einstellen lassen, daß das Turbinengehäuse (58) eine spiralförmige Seitenwand (60a, 60b) umfaßt, die mit einer Auslaßöffnung (32; 38; 88; 90) und mit zwei gegenüberliegenden identischen Ansetzkanten (62, 64) versehen ist, die sich wahlweise auf der Auslaßkante (56) des Anschlußstücks (52) anpassen können, um die Bildung von zwei verschiedenen Ansetzpositionen durch Drehen des Turbinengehäuses um eine halbe Umdrehung um eine zweite Achse (YY) zu ermöglichen, die senkrecht zur ersten Achse (XX) verläuft, und daß der Motorträger (68) eine Montagekante (66) umfaßt, die sich auf der Ansetzkante (62, 64) des Turbinengehäuses (58) anpassen läßt, die der Ansetzkante gegenüberliegt, die sich auf dem Anschlußstück (52) anpaßt.

2. Gebläse nach Anspruch 1 , **dadurch gekennzeichnet,** daß sich die Einlaßkante (54) und die Auslaßkante (56) des Anschlußstücks (52) in Ebenen befinden, die parallel zueinander und senkrecht zur ersten Achse (XX) verlaufen.

3. Gebläse nach Anspruch 1 , **dadurch gekennzeichnet,** daß sich die beiden Ansetzkanten (62, 64) des spiralförmigen Gehäuses (58) in zueinander parallelen Ebenen befinden.

4. Gebläse nach Anspruch 1 , **dadurch gekennzeichnet,** daß das spiralförmige Gehäuse (58) aus zwei allgemein gleichartigen Teilen (58a, 58b) besteht, die durch Verbindungskanten (70a, 70b) zusammengefügt werden, welche sich in Ebenen erstrecken, die parallel zu den Ansetzkanten verlaufen.

5. Gebläse nach Anspruch 4 , **dadurch gekennzeichnet,** daß einer (58b) der beiden Spiralgehäuseteile Befestigungsansätze (72) umfaßt, die eine Befestigungsebene (74) bilden, die sich parallel und in der Nähe der Verbindungsebene der beiden Spiralgehäuseteile erstrecken.

6. Heizungs- und/oder Klimaanlage für Kraftfahrzeuge, **dadurch gekennzeichnet,** daß sie zwei Gebläse nach einem der Ansprüche 1 bis 5 enthält, die jeweils am Auslaß von zwei identischen Luftzufuhrgehäusen (28, 34; 84, 86) angebracht und jeweils an einem der beiden gegenüberliegenden Lufteinlässe (20, 22) eines Verteilergehäuses (10) angebracht sind.

7. Anlage nach Anspruch 6 , **dadurch gekennzeichnet,** daß die Gebläse (24, 26; 80, 82) Gestaltungen besitzen, die sich durch die Position des Anschlußstücks (52) voneinander unterscheiden.
